# EUROPÄISCHE PATENTSCHRIFT

(11) **EP 2 593 209 B1**
(45) Veröffentlichungstag und Bekanntmachung des Hinweises auf die Patenterteilung: **13.01.2016**
(21) Anmeldenummer: 11732432.7
(22) Anmeldetag: 11.07.2011
(51) Int. Cl.: B01D 53/26, B01D 53/04

(54) **KOMPAKTER ADSORPTIONSTROCKNER**
COMPACT ADSORPTION DRYER
SÉCHEUR À ADSORPTION COMPACT

(30) Priorität: 13.07.2010 DE 102010036382
(43) Veröffentlichungstag der Anmeldung: 22.05.2013
(73) Patentinhaber: Beko Technologies GmbH, 41468 Neuss (DE)
(72) Erfinder: SCHLENSKER, Herbert, 51381 Leverkusen (DE); SINSTEDTEN, Johannes, 41352 Korschenbroich (DE)
(74) Vertreter: Kayser, Martin
(86) Internationale Anmeldenummer: PCT/EP2011/061776
(87) Internationale Veröffentlichungsnummer: WO 2012/007433

(56) Entgegenhaltungen:
- DE-A1- 10 355 928
- US-A- 4 673 420
- US-A- 5 403 387

## Beschreibung

Die Erfindung betrifft einen Adsorptionstrockner zur Aufbereitung von Gasen, insbesondere von Druckluft, aufweisend
1. einen Steuerkopf mit Ventilen, Rohranschlüssen und Mitteln zur Aufnahme von Kartuschen,
2. mindestens zwei mit dem Steuerkopf verbindbare und mit Trockenmittel gefüllte Kartuschen, denen über den Steuerkopf bedarfsweise ein Fluidstrom zuführbar ist und deren freie Enden frei von jeglicher Anschluss- und Ventiltechnik sind.
wobei die Kartuschen jeweils einen Deckel, einen Kartuschenmantel, einen Boden sowie ein Zentralrohr, das sich durch den Deckel in das Innere des Kartuschenmantels erstreckt, aufweisen.

Adsorptionstrockner sind in der Regel kaltregenerierend ausgeführt und seit langem im Einsatz. Von zwei mit Trockenmittel gefüllten Adsorberbehälter bzw. Kartuschen trocknet ein Adsorberbehälter den Gasstrom, der über den Steuerkopf zugeführt wird, durch Adsorption, während der andere Adsorberbehälter die Regeneration des Trockenmittels mit einem Regenerationsgasstrom bewirkt. Als Regenerationsgasstrom wird in der Regel ein annähernd auf Umgebungsdruck entspannter Teilstrom des getrockneten Gasstroms verwendet. Die Dauer der Regenerationsphase entspricht in etwa der Dauer der Adsorptionsphase, wobei sich die Regenerationsphase aufteilt in eine aktive Regenerationsphase mit Strömung der Regenerationsluft und eine passive Regenerationsphase ohne Strömung der Regenerationsluft.

Vor Erreichen der Aufnahmekapazität des Trockenmittels erfolgt mit Hilfe von Umschaltventilen ein Umschalten der Fluidströme und damit ein Funktionstausch der beiden Adsorberbehälter. Das heißt, dass beide Behälter zwischen Adsorption und Regeneration und dazu auch zwischen Betriebsdruck und Umgebungsdruck wechseln.

Das üblicherweise eingesetzte Trockenmittel hat nur eine begrenzte Lebensdauer, wodurch ein Austausch unumgänglich ist. Die Lebensdauer des Trockenmittels ist dabei in erster Linie von den Betriebsbedingungen vor Ort abhängig. Der Austausch des Trockenmittels sowie je nach Ausführung des Adsorptionstrockners auch der Austausch von weiteren Betätigungsmittel oder des gesamten Steuerkopfes sind aufwendig und erfordern besondere Fachkenntnisse. Zum Beispiel ist beim Befüllen des Trockenmittels wesentlich, dass die Adsorberbehälter gleichmäßig und kompakt mit Trockenmittel befüllt werden, um bei Durchströmen mit zu trocknendem Gas jede Bewegung einzelner Kugeln des Trockenmittels zu vermeiden. Hierdurch werden unzulässiger Abrieb und die Bildung offener Strömungskanäle vermieden.

Ein gattungsgemäßer Adsorptionstrockner ist in der DE 103 55 928 A1 beschrieben. Bei diesem können zwei Adsorberbehälter in einen Steuerkopf eingesetzt werden, so dass nach Lösen der Adsorberbehälter der Steuerkopf über die Rohranschlüsse im Fluidsystem vor Ort verbleiben kann. Sämtliche Ventile sind dabei im Steuerkopf angeordnet und können ggf. separat ausgetauscht werden. Die Adsorberbehälter sind jeweils durch ein Gehäuse gebildet, das einen Boden, einen Behältermantel und einen Deckel aufweist. In den Adsorberbehälter ist Trockenmittel enthalten, alternativ kann auch eine Trockenmittelpatrone eingesetzt werden. Die Adsorberbehälter und der Steuerkopf werden über ein Innengewinde an den Adsorberbehältern und ein am Steuerkopf angeordnetes Außengewinde miteinander verschraubt. Um eine definierte Fluidzuführung zu gewährleisten, ist als weiteres Bauteil jeweils ein Behälterkopf vorgesehen, der jeweils zwischen einem Adsorberbehälter und dem Steuerkopf eingesetzt wird. Es ist als vorteilhaft beschrieben, dass vor dem Anschrauben des Adsorberbehälters der Behälterkopf am Festteil vorzumontieren ist, so dass er dort lagerichtig gehalten wird. Die Druckfestigkeit wird durch Aufschrauben des Adsorberbehälters hergestellt.

Grundsätzlich verbessert die vorgeschlagene Vorrichtung die Wartung und Instandhaltung des Adsorptionstrockners vor Ort bereits, dennoch ist der Aufbau kompliziert und auch der Austausch der Adsorberbehälter vor Ort nicht schnell und einfach möglich. Weiterhin sind Längenvariationen und Durchmesservarianten der Adsorberbehälter in Anpassung an die Gegebenheiten vor Ort nur mit erheblichem Aufwand möglich. Aufgrund der Gewindeverbindung sind der Außendurchmesser der Adsorberbehälter und der Anschlußbereich des Steuerkopfs vorgegeben.

Die Aufgabe der vorliegenden Erfindung besteht darin, einen Adsorptionstrockner zu schaffen, der eine schnelle und einfache Wartung und Instandhaltung vor Ort ermöglicht. Insbesondere soll es möglich sein, die Adsorberbehälter schnell und einfach auszutauschen. Eine Anpassung der Dimensionen der Adsorberbehälter an die Gegebenheiten vor Ort soll ohne aufwendige konstruktive Maßnahmen realisierbar sein. Schließlich soll die Druckdichtigkeit der Adsorberbehälter im Betrieb höchsten Anforderungen entsprechen. Die Nachteile des Standes der Technik sollen vermieden werden.

Die Aufgabe wird erfindungsgemäß durch einen gattungsgemäßen Adsorptionstrockner gelöst, bei dem
3. jeweils der Deckel, der Kartuschenmantel und der Boden der Kartuschen über das Zentralrohr miteinander verspannbar sind,
4. das Zentralrohr jeweils aus der Kartusche herausragt und als Anschlussmittel für den Steuerkopf dient,
5. ein außerhalb des Deckels (30) angeordneter Bereich des Zentralrohrs (36) als Anschlussbereich für die Verbindung mit dem Steuerkopf (24) dient,
6. die Kartusche selbst druckdicht ausgeführt ist.
7. der Verbindungsbereich des Zentralrohrs (36) und die Mittel zur Aufnahme der Kartuschen (22) als Schnellverbindung ausgeführt sind.

Die Erfindung schlägt somit vor, als Adsorberbehälter Kartuschen einzusetzen, die bereits druckdicht ausgeführt sind, so dass die Druckdichtigkeit des Systems bzw. des Adsorptionstrockners nicht erst bei der Installation vor Ort erfolgt. Bei einem Austausch der Kartuschen können diese vom Adsorptionstrockner abgenommen und durch neue oder bereits neu befüllte Kartuschen ersetzt werden. Die Kartuschen mit verbrauchtem Trockenmittel werden beim Hersteller oder einen Serviceunternehmen neu befüllt, wobei die Druckdichtigkeit der Kartuschen bereits im Vorfeld im Werk getestet werden kann. Damit ist die Gefahr minimiert, dass bei einem Austausch der Kartuschen eine Leckage verursacht wird.

Die Verbindung der Kartuschen mit dem Steuerkopf erfolgt unmittelbar über das Zentralrohr selbst. In einer besonders vorteilhaften Ausführungsvariante steht ein freies Ende des Zentralrohrs gegenüber der Kartusche bzw. gegenüber dem Deckel vor und kann in eine entsprechende Öffnung des Steuerkopfs in diesen eingesetzt werden. Hierzu kann das Zentralrohr beispielsweise auf seiner Außenseite des freien Endes ein Gewinde aufweisen, das in ein Innengewinde der Öffnung des Steuerkopfs einschraubbar ist, vorteilhafterweise ist aber eine Schnellverbindung vorgesehen. Derartige Schnellverbindungen oder vereinfachte Anschlussvorrichtungen sind aus der Drucklufttechnik bereits bekannt. Beispielsweise kann das Zentralrohr hierzu an seinem freien Ende, also dem Anschlussbereich, eine oder mehrere umlaufende Nuten aufweisen, in die ein entsprechendes Element eines im Steuerkopf angeordneten Verbindungsmittels eingreift. Die Kartuschen müssen in diesem Fall lediglich in eine der Öffnungen des Steuerkopfs hineingedrückt oder eingesteckt werden, der Anschlussbereich des Zentralrohrs rastet dann innerhalb des Steuerkopfes ein und eine druckdichte Verbindung ist gewährleistet. Alternativ ist auch eine Schraubverbindung denkbar, wobei geeignete Dichtelemente eine ausreichende Dichtigkeit bewirken. Die Dichtelement können beispielsweise als Dichtringe ausgeführt sein, die in Nuten gehalten sind.

Ein wesentlicher Vorteil der Erfindung besteht auch darin, dass die Befüllung der Kartuschen werkseitig vorgenommen werden kann und somit höchsten Anforderungen entsprechen kann. Es kann eine dichtere Schüttung erreicht werden, die im Betrieb nahezu abriebsfrei arbeitet. Fehler bei der Befüllung und ungewollte Lekagen des Behälters sind somit nahezu ausgeschlossen.

Der Steuerkopf beinhaltet die gesamte Ventiltechnik und die notwendigen Rohranschlüsse und Behälterverbindungen. Dadurch ist das zweite Ende der Kartusche frei von jeglicher Anschluss- und Ventiltechnik, was den Kartuschenwechsel sehr einfach macht. Somit ist auch eine einfache Wartung und Instandhaltung des Steuerkopfs möglich, denkbar ist beispielsweise ein Austausch des gesamten Steuerkopfs bei anschließender Weiterverwendung der noch nicht vollständig aufgebrauchten Kartuschen. Der Steuerkopf kann erfindungsgemäß beispielsweise vier vorgesteuerte Membranventile für die Druckluftzufuhr bzw. Spülluftabfuhr aufweisen, wobei zwei Kugelrückschlagventile austrittsseitig vorgesehen sind. Auch können unterschiedliche Steuerkopfgrößen bei gleicher Kartuschengröße problemlos realisiert werden, da lediglich die Verbindung des Anschlussbereiches des Zentralrohrs mit dem Steuerkopf Voraussetzung für einen funktionsfähigen Adsorptionstrockner sind.

Dadurch, dass das Zentralrohr selbst als Zugstange genutzt wird, die den Deckel und den Boden der Kartusche gegen den Kartuschenmantel verspannen, ist eine Anpassung der Größe und Dimension einer Kartusche beispielsweise an Gegebenheiten vor Ort oder bei Veränderung einer Produktionsserie ebenfalls schnell, einfach und problemlos möglich. Der Durchmesser und die Länge einer Kartusche ist für eine mögliche Verbindung mit einem bereits vor Ort eingesetzten Steuerkopf unerheblich, lediglich der Durchmesser und die Ausführung des Anschlußbereichs des Zentralrohrs ist von Bedeutung. Somit kann beispielsweise die Länge einer Kartusche durch Austausch des Kartuschenmantels schnell und einfach verändert werden und die Druckdichtigkeit durch Verspannen der Komponenten gegeneinander gewährleistet werden.

Bei den erfindungsgemäßen Kartuschen gibt es zwei verschiedene Möglichkeiten zur Einleitung des Fluids. In einer ersten Variante wird das Fluid durch eine oder mehrere Deckelöffnungen im Deckel durch diesen hindurch in das Trockenmittel eingeleitet, strömt im Bodenbereich der Kartusche durch Zentralrohröffnungen in das Zentralrohr und wird durch das Zentralrohr zurück in den Steuerkopf geleitet. Zur Regenerierung der Kartusche wird die Strömungsrichtung umgekehrt, Spülluft wird über das Zentralrohr und durch die Öffnungen im Bodenbereich in das Trockenmittel eingeleitet und somit das Trockenmittel regeneriert.

In der zweiten Ausführungsvariante ist die Strömungsrichtung umgekehrt. Das Fluid strömt durch das Zentralrohr zum Bodenbereich, tritt dort aus dem Zentralrohr aus, strömt von unten nach oben durch das Trockenmittel und schließlich durch Deckelöffnungen wieder aus der Kartusche heraus.

Die zweite Variante wird bevorzugt dann eingesetzt, wenn die Kartuschen hängend im Steuerkopf angeordnet sind. Im Bodenbereich nach dem Zentralrohr können sich dann eventuell Kondensattröpfchen abscheiden, sammeln und verbleiben. Erfindungsgemäß kann hierfür eine Kammer vorgesehen werden. Alternativ kann die Kammer bzw. der Raum vorteilhafterweise mit Trockenmittel aufgefüllt werden. Bei der Regeneration (Rücktrocknung durch Spülluft) wird diese Feuchte dann automatisch mit ausgetragen, das Kondensat muss nicht manuell abgeführt werden. Eine eigene Kammer oder ein eigener Raum für das anfallende Kondensat kann vorteilhaft sein, ist aber nicht unbedingt notwendig.

In beiden Ausführungsvarianten kann erfindungsgemäß im Bereich des Austritts des Fluids aus dem Trockenmittel, also bei der ersten Variante vor den Zentralrohröffnungen und bei der zweiten Variante vor den Deckelöffnungen, ein Filterelement vorgesehen sein. Dieses verhindert einen Austrag von Abrieb des Trockenmittels aus der Kartusche.

Auch kann erfindungsgemäß ein Schalldämpfer vorgesehen sein, der beispielsweise zwischen den Kartuschen angeordnet ist und die Geräuschentwicklung des Adsorptionstrockners deutlich reduziert.

Erfindungsgemäß hat sich eine hängende Anordnung der Kartuschen in dem Steuerkopf als besonders vorteilhaft erwiesen. Dies bedeutet, dass die Kartuschen von unten in Öffnungen bzw. Verbindungsmittel des Steuerkopfs eingesetzt werden und frei in diesem hängen. Alternativ ist aber auch eine umgekehrte Anordnung möglich, nämlich dass die Kartuschen von oben in den Steuerkopf eingesetzt werden und sozusagen auf diesem stehen. Schließlich ist ebenfalls eine seitliche Anordnung, bei der die Kartuschen beispielsweise horizontal ausgerichtet sind, denkbar, wenn dies aufgrund der Gegebenheiten vor Ort vorteilhaft sein sollte.

Die Öffnungen des Steuerkopfs sind in diesem Fall entsprechend angeordnet. Der Adsorptionstrockner kann eine Wandhalterung aufweisen, je nach Ausführung der Rohrleitung kann aber auf eine solche Wandhalterung auch verzichtet werden.

Der Deckel, der Boden und der Kartuschenmantel sind vorzugsweise über geeignete Dichtmittel, beispielsweise O-Ringe gegeneinander abgedichtet. Um ein Verspannen der Elemente gegeneinander zu ermöglichen, kann das Zentralrohr auf seiner Außenseite ein Gewinde aufweisen, auf das der Boden oder der Deckel aufgeschraubt werden können. Denkbar ist aber auch, dass der Boden und der Deckel lediglich über Öffnungen auf das Zentralrohr aufgeschoben und über eine außen angeordnete Mutter verspannt werden. In diesem Fall erstreckt sich das Zentralrohr nicht nur durch den Deckel, sondern auch durch den Boden der Kartusche, wodurch das Zentralrohr dann auf der Deckelseite den Anschlussbereich für den Steuerkopf und auf der Bodenseite einen Verspannungsabschnitt mit einem Außengewinde ausbildet.

Da die erfindungsgemäße Kartusche selbst bereits druckdicht ausgeführt ist, ist ein weiteres druckdichtes Gehäuse, das die Kartusche umgibt, nicht notwendig. Hierdurch wird aufgrund der Einsparung des Gehäuses Material und Gewicht eingespart, was auch bei der Installation des Adsorptionstrockners vor Ort vorteilhaft ist. Das geringere Eigengewicht des Adsorptionstrockners verbessert die Möglichkeiten eines hängenden Einbaus und macht auch die Servicearbeiten einfacher. Durch den Verzicht auf das Gehäuse baut der Adsorptionstrockner insgesamt kleiner, was insbesondere bei Adsorptionstrocknern mit geringer Leistung vorteilhaft ist, da diese häufig in Endstellennähe betrieben und/oder als Einbaugeräte verwendet werden.

Der erfindungsgemäße Adsorptionstrockner kann für unterschiedlichste Anforderungen ausgelegt sein, er eignet sich insbesondere für Fluidströme von etwa 3 Nm³/h bis etwa 150 Nm³/h (Normkubikmeter Luft pro Stunde).

Der erfindungsgemäße Adsorptionstrockner eignet sich insbesondere für eine Kombination mit einem Eingangsfilter (Feinstfilter), vorteilhafterweise kann dieser auch in den Adsorptionstrockner integriert sein. Er weist eine Schnittstelle zur Übertragung von Alarm- und Wartungsmeldungen auf und ist vorteilhafterweise elektronisch gesteuert. Auch kann ein zweiter Eingangsfilter (Mikrofilter) vorgesehen sein.

Der Steuerkopf kann erfindungsgemäß Mittel vorsehen, die ein Verschwenken des Steuerkopfes mit den Kartuschen im eingebauten Zustand ermöglichen. Durch Verschwenken des gesamten Steuerkopfs mit den Kartuschen können diese in eine Position gebracht werden, in der ausreichend Raum zum Entnehmen und Einfügen der Kartuschen zur Verfügung steht. Denkbar ist auch, dass nicht der gesamte Steuerkopf verschwenkbar ausgeführt ist, sondern lediglich derjenige Bereich, der die Mittel zur Verbindung der Kartuschen zum Steuerkopf aufweist. Ein zweiter Bereich, der beispielsweise die Rohranschlüsse aufweist, verbleibt dagegen in seiner Position. Der Steuerkopf ist bei dieser Ausführungsvariante in einen schwenkbaren und in einen nicht schwenkbaren Teilbereich unterteilt.

Der Steuerkopf kann außerdem erfindungsgemäß Mittel in Form von Anschlussstücken vorsehen, die durch Montage in unterschiedlichen Positionen ein Wechseln der Ein- und Austrittsanschlüsse ermöglichen. Damit ist eine umgekehrte Durchflussrichtung des Steuerkopfes in der Rohrleitung ermöglicht. Dies ist vorteilhaft für die Anpassung an die Gegebenheiten am Aufstellungsort.

Mit Hilfe der nachfolgenden Figuren wird die Erfindung näher erläutert. Die gezeigten Ausführungsvarianten sind dabei nur beispielhaft zu verstehen und sollen die Erfindung nicht auf diese beschränken. Es zeigen:
- Fig. 1:: einen erfindungsgemäßen Adsorptionstrockner mit hängenden Kartuschen im Schnitt,
- Fig. 2:: einen erfindungsgemäßen Adsorptionstrockner mit stehenden Kartuschen, teilweise geschnitten,
- Fig. 3:: eine erfindungsgemäße Kartusche im Schnitt,
- Fig. 4:: eine zweite Ausführungsvariante einer erfindungsgemäßen Kartusche im Schnitt,
- Fig. 5:: ein Adsorptionstrockner gemäß Fig. 1 in Seitenansicht.

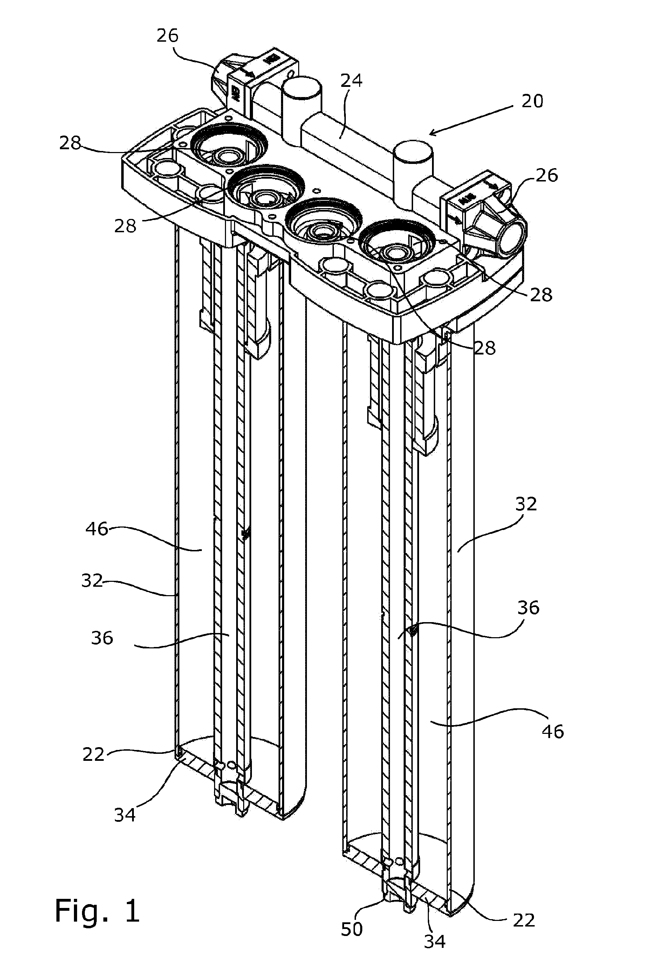

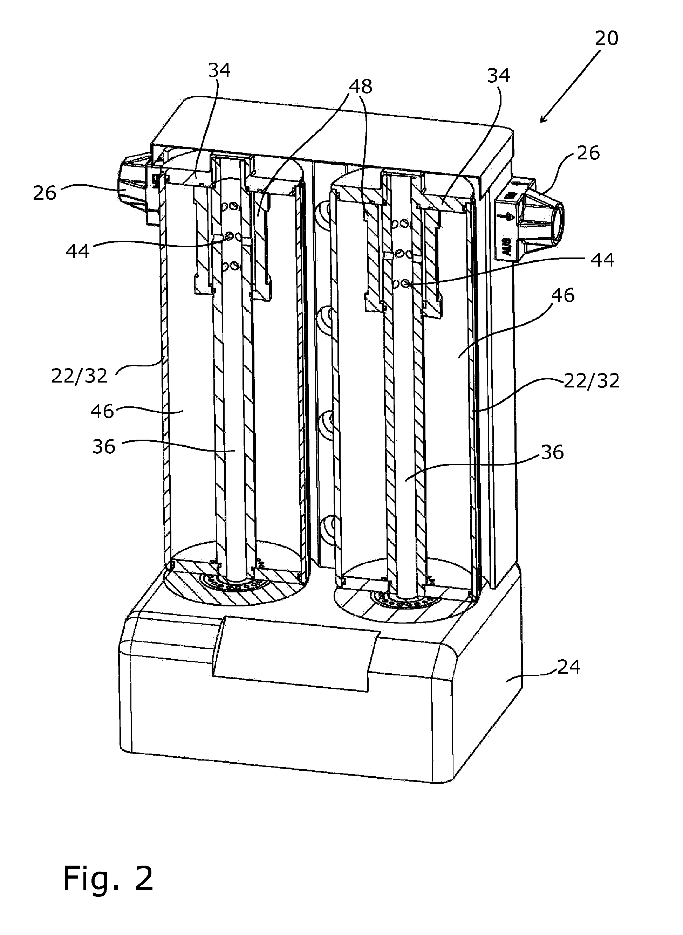

Die Figuren 1 und 2 zeigen zwei verschiedene Ausführungsvarianten eines erfindungsgemäßen Adsorptionstrockners 20. Zwei Adsorberbehälter bzw. Kartuschen 22 sind in einen Steuerkopf 24 eingesetzt, gemäß Fig. 1 hängend und gemäß Figur 2 stehend. Auch eine horizontale Anordnung der Kartuschen 22 ist möglich, letztendlich können die Kartuschen 22 in jeder beliebigen Position und unter beliebigen Winkeln in den Steuerkopf 24 eingesetzt werden, stets abhängig von der Ausführung des Steuerkopfes 24 und den Bedingungen vor Ort.

Der Steuerkopf 24 beinhaltet u.a. Rohranschlüsse 26, Ventile 28 und nicht gezeigte Mittel zur Verbindung des Steuerkopfs 24 mit den Kartuschen 22. Im gezeigten Ausführungsbeispiel sind vier vorgesteuerte Membranventile sowie austrittsseitig Kugelrückschlagventile vorgesehen.

Wie sich aus den Figuren 1 bis 4 ergibt, weisen die Kartuschen 22 einen Deckel 30, einen Kartuschenmantel 32 und einen Boden 34 auf. Ein Zentralrohr 36 ist innerhalb der Kartusche angeordnet und erstreckt sich durch den Deckel 30 und je nach Ausführungsvariante auch durch den Boden 34 hindurch. Deckelseitig ergibt sich somit ein freies Ende des Zentralrohrs 36, das als Anschlussbereich für den Steuerkopf 24 dient. Die einzelnen Elemente der Kartuschen 22 sind durch Dichtmittel gegeneinander abgedichtet, die in die dafür vorgesehenen Dichtmittelnuten 38 angeordnet sind. Die Kartuschen 22 sind somit druckdicht ausgeführt.

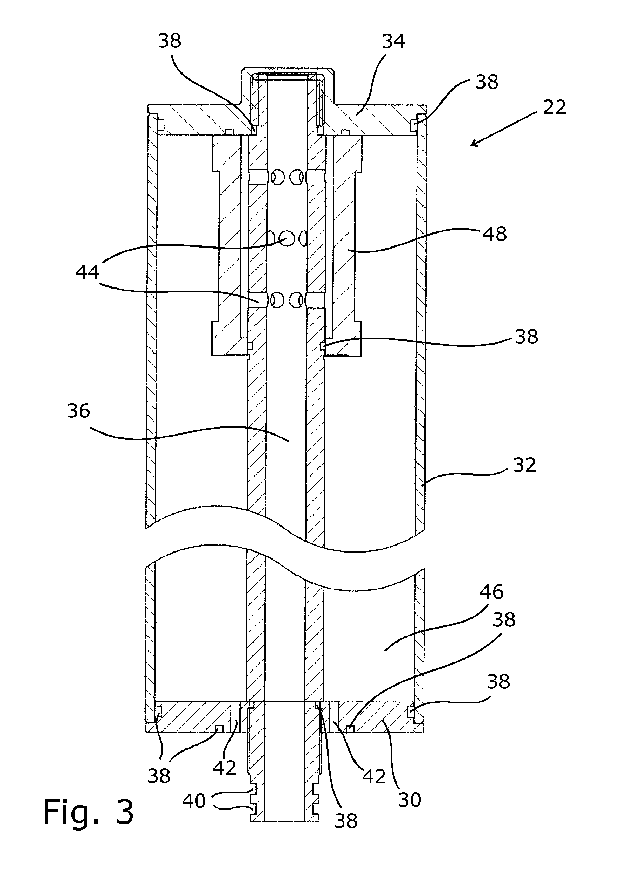

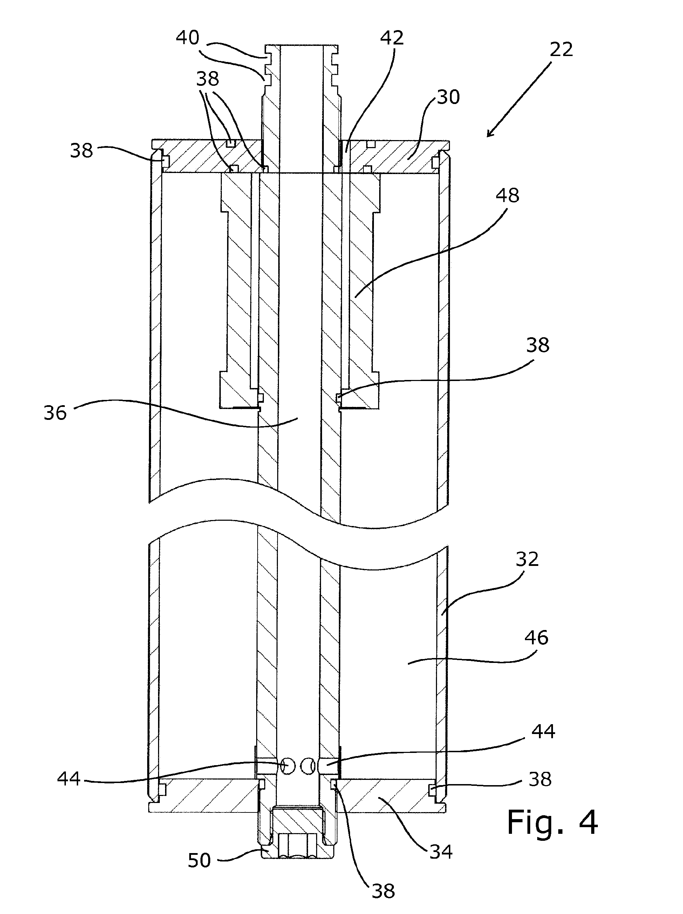

Im gezeigten Ausführungsbeispiel gemäß der Figuren 3 und 4 sind die Kartuschen 22 mit Gewinden und Dichtungsringen in den Nuten 40 versehen, die in entsprechende Mittel zur Verbindung der Kartuschen 22 mit dem Steuerkopf 24 lediglich in den Steuerkopf 24 eingeschraubt werden müssen.

Alternativ ist z.B. auch eine Bajonett- oder Steckverbindung denkbar. Ein Verschrauben und somit ein mehrfaches Drehen der Kartuschen 22 um die eigene Achse ist dann nicht notwendig. Hierfür weist das jeweilige Zentralrohr 36 im Anschlußbereich Anschlussnuten 40 auf, die mit entsprechenden Mitteln des Steuerkopfs 24 zusammenwirken. Im Deckel 30 sind Deckelöffnungen 42 und im Zentralrohr 36 im Bodenbereich Zentralrohröffnungen 44 erkennbar.

Die Ausführungsvariante gemäß Figur 3 eignet sich im Besonderen für einen stehenden Einsatz in einem Steuerkopf 24. Dies bedeutet, dass der Anschlußbereich des Zentralrohrs 36 von oben in eine entsprechende Öffnung des Steuerkopfs 24 eingesetzt wird. Das Fluid wird durch die Deckelöffnungen 42, die in dieser Ausführungsvariante dem Steuerkopf zugewandt sind, in einen Innenraum 46 der Kartusche 22 eingeleitet, der mit nicht gezeigten Adsorptionsmittel gefüllt ist. Erkennbar ist auch, dass sich das Zentralrohr 36 in dieser Ausführungsvariante nicht durch den Boden 34 hindurch erstreckt.

Das eingeleitete Fluid steigt durch das Trockenmittel auf und gelangt zu einem Austrittsstaubfilter 48, der gelöstes oder abgeriebenes Adsorptionsmittel vor dem Eintritt in die Zentralrohröffnungen 44 und schließlich in das Zentralrohr 36 zurückhält.

Die Ausführungsvariante gemäß Figur 4 eignet sich insbesondere für eine hängende Anordnung in einem Steuerkopf, der Anschlußbereich des Zentralrohrs 36 wird von unten in den Steuerkopf 24 eingeführt. Das Fluid gelangt bei dieser Ausführungsvariante durch das Zentralrohr 36 in die Kartusche 22 und tritt durch Zentralrohröffnungen 44 im Bodenbereich aus diesem in das Adsorptionsmittel aus. Im Innenraum 26 steigt es dann bis zum Austrittsstaubfilter 48 auf, durchströmt diesen und entweicht durch die Deckelöffnung 42. Bei dieser Ausführungsvariante erstreckt sich das Zentralrohr 36 durch den Boden 34 hindurch und ist durch eine Verschlusskappe 50 verschlossen.

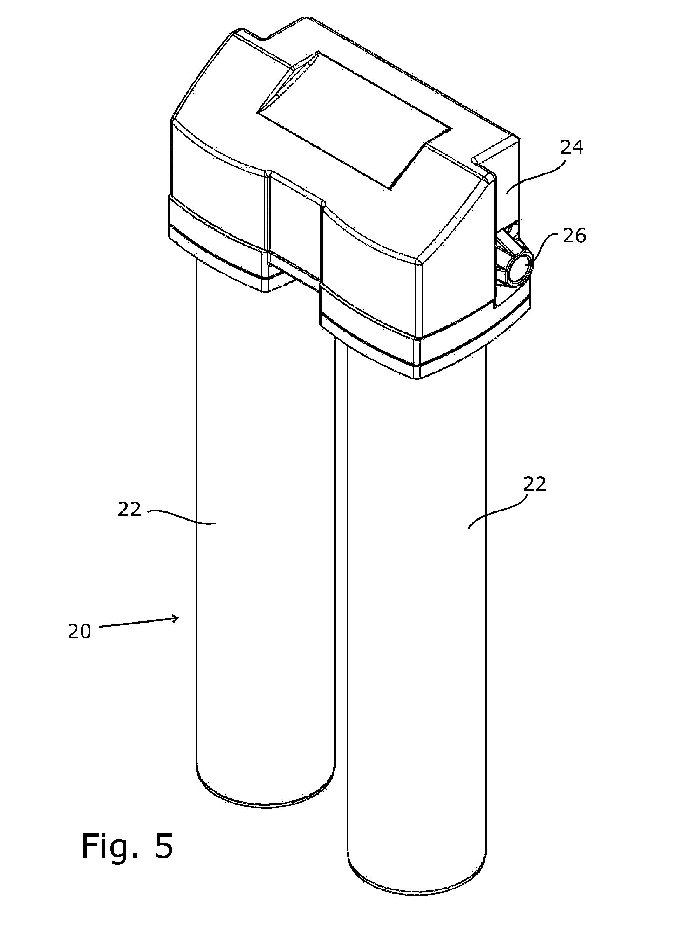

Fig. 5 zeigt den erfindungsgemäßen Adsorptionstrockner gemäß Fig. 1 in Seitenansicht. Einer der wesentlichen Vorteile wird durch diese Ansicht besonders deutlich, nämlich dass die freien Enden der Kartuschen 22 frei von Anschlüssen und Ventiltechnik sind.

Die Erfindung ist nicht auf die dargestellte Ausführungsvarianten beschränkt, vielmehr ist beispielsweise auch eine hängende Anordnung der Ausführungsvariante gemäß Figur 3 bzw. ein stehender Einsatz der Ausführungsvariante gemäß Figur 4 möglich. Das gleiche gilt für die unterschiedliche Ausführung der Bodenbereiche. Sowohl für die stehende, also auch für die hängende Variante können beide Arten die Befestigung des Bodens 34 verwendet werden.

## Patentansprüche

1. Adsorptionstrockner (20) zum Aufbereiten von Gasen, insbesondere von Druckluft, aufweisend
1. einen Steuerkopf (24) mit Ventilen (28), Rohranschlüssen (26) und Mittel zur Aufnahme von Kartuschen,
2. mindestens zwei mit dem Steuerkopf (24) verbindbare und mit Adsorptionsmittel gefüllte Kartuschen (22), denen über den Steuerkopf (24) bedarfsweise ein Fluidstrom zuführbar ist und deren freie Enden frei von jeglicher Anschluss- und Ventiltechnik sind.
wobei die Kartuschen (22) jeweils einen Deckel (30), einen Kartuschenmantel (32), einen Boden (34) sowie ein Zentralrohr (36), das sich durch den Deckel (30) in einen Innenraum (46) der Kartusche (22) erstreckt, aufweisen
, wobei
3. jeweils der Deckel (30), der Kartuschenmantel (32) und der Boden (34) der Kartuschen (22) über das Zentralrohr (36) miteinander verspannbar sind,
4. das Zentralrohr (36) jeweils aus der Kartusche (22) herausragt und als Anschlussmittel für den Steuerkopf (24) dient,
5. ein außerhalb des Deckels (30) angeordneter Bereich des Zentralrohrs (36) als Anschlussbereich für die Verbindung mit dem Steuerkopf (24) dient,
6. die Kartusche (22) selbst druckdicht ausgeführt ist.
**dadurch gekennzeichnet, dass**
7. der Verbindungsbereich des Zentralrohrs (36) und die Mittel zur Aufnahme der Kartuschen (22) als Schnellverbindung ausgeführt sind.

2. Adsorptionstrockner (20) nach Anspruch 1, **dadurch gekennzeichnet, dass** die Schnellverbindung als Einsteckverbindung ausgeführt ist.

3. Adsorptionstrockner (20) nach Anspruch 1, **dadurch gekennzeichnet, dass** die Schnellverbindung als Bajonettverbindung ausgeführt ist.

4. Adsorptionstrockner (20) nach einem der Ansprüche 1 bis 3, **dadurch gekennzeichnet, dass** die Kartuschen (22) hängend im Steuerkopf (24) angeordnet sind.

5. Adsorptionstrockner (20) nach einem der Ansprüche 1 bis 3, **dadurch gekennzeichnet, dass** die Kartuschen (22) stehend im Steuerkopf (24) angeordnet sind.

6. Adsorptionstrockner (20) nach einem der Ansprüche 1 bis 5, **dadurch gekennzeichnet, dass** im Innenraum (46), der Kartuschen (22) ein Austrittsstaubfilter (48) angeordnet ist.

7. Adsorptionstrockner (20) nach einem der Ansprüche 1 bis 6, **dadurch gekennzeichnet, dass** durch Wechsel eines Anschlussstückes Ein- und Austrittsanschluss wechselbar sind.

8. Adsorptionstrockner (20) nach einem der Ansprüche 1 bis 6, **dadurch gekennzeichnet, dass** die Kartuschen (22) im eingesetzten Zustand schwenkbar ausgeführt sind.

## Claims

1. An adsorption dryer (20) for the treatment of gases, in particular of compressed air, comprising
1. a control head (24) with valves (28), pipe connections (26) and means for accommodating cartridges,
2. at least two cartridges (22), which are connectable to the control head (24) and are filled with adsorption agent, to which a fluid flow can be supplied via the control head (24) as required and whose free ends are free of any connection and valve technology,
wherein the cartridges (22) each have a cover (30), a cartridge casing (32), a bottom (34) and a central pipe (36) which extends through the cover (30) into an interior (46) of the cartridge (22),
wherein
3. the cover (30), the cartridge casing (32) and the bottom (34) of the cartridges (22) can in each case be clamped together via the central pipe (36),
4. the central tube (36) in each case projects from the cartridge (22) and acts as a connection means for the control head (24),
5. a portion of the central pipe (36) disposed outside the cover (30) serves as a connection portion for connection to the control head (24),
6. the cartridge (22) itself is configured in a pressure-tight manner, **characterised in that**
7. the connection portion of the central pipe (36) and the means for accommodating the cartridges (22) are configured as a quick connection.

2. The adsorption dryer (20) according to claim 1, **characterised in that** the quick connection is configured as a plug-in connection.

3. The adsorption dryer (20) according to claim 1, **characterised in that** the quick connection is configured as a bayonet connection.

4. The adsorption dryer (20) according to any one of the claims 1 to 3, **characterised in that** the cartridges (22) are disposed in a suspended manner in the control head (24).

5. The adsorption dryer (20) according to any one of the claims 1 to 3, **characterised in that** the cartridges (22) are disposed in a standing manner in the control head (24).

6. The adsorption dryer (20) according to any one of the claims 1 to 5, **characterised in that** an outlet dust filter (48) is disposed in the interior (46) of the cartridges (22).

7. The adsorption dryer (20) according to any one of the claims 1 to 6, **characterised in that** the inlet and outlet connections can be interchanged by changing a connection member.

8. The adsorption dryer (20) according to any one of the claims 1 to 6, **characterised in that** the cartridges (22) are configured to be pivotable in the inserted state.

## Revendications

1. Sécheur par adsorption (20) pour le traitement de gaz, en particulier d'air comprimé, présentant
1. une tête de commande (24) ayant des soupapes (28), des raccords de tuyau (26) et des moyens de réception de cartouches,
2. au moins deux cartouches (22) qui sont aptes à être reliées à ladite tête de commande (24) et sont remplies d'adsorbant et lesquelles peuvent être alimentées, selon les besoins, en un courant de fluide via ladite tête de commande (24) et dont les extrémités libres sont exemptes de toute technique de raccordement et de soupape,
lesdites cartouches (22) présentant chacune un couvercle (30), une chemise de cartouche (32), un fond (34) ainsi qu'un tuyau central (36) qui s'étend à travers ledit couvercle (30) dans un espace intérieur (46) de la cartouche (22),
dans lequel
3. respectivement le couvercle (30), la chemise de cartouche (32) et le fond (34) des cartouches (22) peuvent être serrés les uns avec les autres par l'intermédiaire dudit tuyau central (36),
4. ledit tuyau central (36) fait saillie respectivement hors de la cartouche (22) et fait office de moyen de raccordement pour la tête de commande (24),
5. une zone du tuyau central (36) qui est disposée à l'extérieur du couvercle (30) fait office de zone de raccordement pour la liaison à la tête de commande (24),
6. la cartouche (22) même est réalisée de manière à être étanche à la pression,
**caractérisé par le fait que**
7. la zone de liaison du tuyau central (36) et les moyens de réception des cartouches (22) sont réalisés en tant que raccord rapide.

2. Sécheur par adsorption (20) selon la revendication 1, **caractérisé par le fait que** le raccord rapide est réalisé comme assemblage à emboîtement.

3. Sécheur par adsorption (20) selon la revendication 1, **caractérisé par le fait que** le raccord rapide est réalisé en tant que liaison à baïonnette.

4. Sécheur par adsorption (20) selon l'une quelconque des revendications 1 à 3, **caractérisé par le fait que** les cartouches (22) sont disposées de manière pendante dans la tête de commande (24).

5. Sécheur par adsorption (20) selon l'une quelconque des revendications 1 à 3, **caractérisé par le fait que** les cartouches (22) sont disposées debout dans la tête de commande (24).

6. Sécheur par adsorption (20) selon l'une quelconque des revendications 1 à 5, **caractérisé par le fait que** dans l'espace intérieur (46) des cartouches (22) est disposé un filtre anti-poussières de sortie (48).

7. Sécheur par adsorption (20) selon l'une quelconque des revendications 1 à 6, **caractérisé par le fait que** les raccords d'entrée et de sortie peuvent être changés en changeant une pièce de raccordement.

8. Sécheur par adsorption (20) selon l'une quelconque des revendications 1 à 6, **caractérisé par le fait que** les cartouches (22) sont réalisées à pivotement en état inséré.
